# EUROPÄISCHE PATENTSCHRIFT

(11) **EP 2 414 786 B1**
(45) Veröffentlichungstag und Bekanntmachung des Hinweises auf die Patenterteilung: **23.06.2021**
(21) Anmeldenummer: 10710003.4
(22) Anmeldetag: 15.03.2010
(51) Int. Cl.: G01D 1/00, G01D 15/00, G01F 23/00, G01F 23/16

(54) **FELDGERÄT DER PROZESSAUTOMATISIERUNG UMFASSEND EINE VORRICHTUNG ZUR REDUZIERUNG BZW. MINIMIERUNG VON STÖRSIGNALEN**
PROCESS AUTOMATION FIELD DEVICE COMPRISING AN APPARATUS FOR REDUCING OR MINIMIZING INTERFERENCE SIGNALS
APPAREIL DE TERRAIN POUR L'AUTOMATISATION DES PROCESSUS COMPRENANT UN DISPOSITIF PERMETTANT DE DIMINUER OU DE RÉDUIRE À UN MINIMUM LES SIGNAUX PARASITES

(30) Priorität: 31.03.2009 DE 102009002009
(43) Veröffentlichungstag der Anmeldung: 08.02.2012
(73) Patentinhaber: Endress+Hauser SE+Co. KG, 79689 Maulburg (DE)
(72) Erfinder: BRUTSCHIN, Wolfgang, 79650 Schopfheim (DE); RUF, Klaus, 79618 Rheinfelden (DE); SCHLACHTER, Marc, 79664 Wehr (DE)
(74) Vertreter: Andres, Angelika Maria
(86) Internationale Anmeldenummer: PCT/EP2010/053278
(87) Internationale Veröffentlichungsnummer: WO 2010/112326

(56) Entgegenhaltungen:
- DE-A1- 19 954 186
- US-A1- 2008 147 336
- None

## Beschreibung

Die Erfindung betrifft ein Feldgerät der Prozessautomatisierung umfassend eine Vorrichtung zur Reduzierung bzw. Minimierung von Störsignalen. Das Feldgerät weist eine Regel-/Auswerteeinheit mit einer Hauptelektronik und einen Sensor mit einer Sensorelektronik auf. Diese sind entweder räumlich voneinander getrennt und über ein Verbindungsmittel, das üblicherweise als Seil oder Kabel bezeichnet wird, miteinander verbunden. Alternativ sind die Hauptelektronik und die Sensorelektronik bei einem Kompaktgerät in einem Gehäuse angeordnet. Hierbei können beide auf unterschiedlichen Leiterplatten oder aber auch auf der gleichen Leiterplatte angeordnet sein. Weiterhin sind zumindest eine Datenleitung, über die der Sensor und die Regel-/Auswerteeinheit kommunizieren, und eine Versorgungsleitung vorgesehen, über die dem Sensor eine für den Betrieb des Sensors ausreichende Versorgungsspannung zur Verfügung gestellt wird.

Bei dem Feldgerät handelt es sich bevorzugt um ein Füllstandsmessgerät, um ein Druckmessgerät, um ein Durchflussmessgerät oder um ein zu Analysezwecken eines flüssigen oder gasförmigen Mediums ausgestaltetes Analysemessgerät. Es versteht sich von selbst, dass diese Aufzählung keine Einschränkung darstellt; vielmehr wird unter Feldgerät ein Messgerät verstanden, das Information über eine beliebige physikalische oder chemische Prozessgröße zur Verfügung stellt.

Die Erfindung nimmt Bezug auf Seilsonden, die immer dann zum Einsatz kommen, wenn die Messung mittels eines Sensors, z.B. mittels eines Drucksensors oder einer kapazitiven Messsonde, an einem Ort ausgeführt werden soll, der nicht ohne weiteres von außen zugänglich ist. Ein typisches Beispiel ist die Anbringung einer Sonde/eines Sensors auf einer bestimmten Höhe in einem Tank oder in einem sonstigen von außen schwer zugänglichen Behälter. Das Verbindungsmittel, sprich das Seil, dient der Befestigung des Sensors in dem Behälter; gleichzeitig erfolgen über entsprechende Leitungen in dem Seil die Energieversorgung und die Übertragung von Daten zwischen der Auswerteeinheit und dem Sensor.

Aus der US 2008/147336 A1 ist ein Feldgerät der Prozessautomatisierung umfassend eine Vorrichtung zur Reduzierung bzw. Minimierung von Störsignalen des Stands der Technik bekannt.

Aus der EP 1 228 494 B1 ist eine entsprechende Vorrichtung zum Übermitteln von Daten zwischen einem Sensor und einer Auswerteeinheit bekannt geworden. Sensor und Auswerteeinheit sind voneinander abgesetzt und weisen eine gewisse räumliche Distanz auf. Als Seilvarianten ausgestaltete Feldgeräte werden von der Firma Endress+Hauser angeboten und vertrieben.

Um Störströme auf den Leitungen zu eliminieren, werden die in der Auswerteeinheit angeordnete Hauptelektronik und die in dem Sensor befindliche Sensorelektronik üblicherweise galvanisch voneinander getrennt. Zur galvanischen Trennung der Leitungen werden Schaltnetzteile unterschiedlicher Topologie, wie Gegentaktwandler, Sperrwandler oder Flusswandler verwendet. Hierdurch ist es möglich, eventuelle Störströme derart zu reduzieren, dass die Störfestigkeit die jeweiligen Anforderungen der EMV-Normen erfüllt.

Probleme zeigen sich bei der galvanischen Trennung, wenn Spannungen der gleichen Größenordnung übertragen werden sollen. Eine typische DC/DC Übertragung ist beispielsweise die Übertragung von 3.3V auf 3.3V: In diesem Fall ist der Wirkungsgrad gering bzw. die Verlustleistung ist so groß, dass u.U. die Versorgung des Feldgeräts mit Energie nicht mehr sichergestellt ist. Problematisch ist dies insbesondere bei 4-20mA Feldgeräten.

In der EP 1 228 494 B1 wird ebenfalls auf die Störfestigkeit der Übertragung bei einer Seilvariante eines Feldgeräts Bezug genommen. Hier sind Entstörglieder vor die Ausgänge bzw. die Eingänge der beiden Prozessoreinheiten geschaltet. Bei den Entstörgliedern handelt es sich um Tiefpässe, bestehend aus einem Widerstand und einem Kondensator, wobei die Datenleitungen jeweils über den Kondensator geerdet sind. Die Zeitkonstanten der RC-Glieder sind derart gewählt, dass einerseits die Kommunikation nicht beeinträchtigt wird, und dass andererseits Störeinkopplungen weitgehend unterdrückt werden. Weiterhin sind die Widerstände derart niederohmig, dass eine allzu starke Abschwächung des Signalpegels verhindert wird.

Nachteilig bei der bekannten Lösung ist, dass sie nur eine niederfrequente Kommunikation gestattet. Eine hochfrequente Kommunikation wird durch die Tiefpass-Anordnungen erheblich beeinträchtigt bzw. gänzlich unmöglich.

Der Erfindung liegt die Aufgabe zugrunde, ein Feldgerät umfassend eine Vorrichtung vorzuschlagen, die die Störfestigkeit des Feldgeräts auch im Bereich hoher Datenübertragungsraten sicherstellt.

Die Aufgabe wird dadurch gelöst, dass zumindest eine galvanische Trennkomponente vorgesehen ist, die in die zumindest eine Datenleitung eingefügt ist und die die Übertragung von Störsignalen über die Datenleitung verhindert, und dass in den Versorgungsleitungen ein Filtermittel vorgesehen ist, das so ausgelegt ist, dass durch EMV-Normen vorgebbare jeweilige Anforderungen an die Störfestigkeit der Versorgungsleitungen erfüllt sind, wobei es sich bei dem Filtermittel um stromkompensierte oder nicht-stromkompensierte Drosseln handelt.

Die Erfindung bezieht sich auf eine teilgalvanische Trennung. Die Versorgungsleitungen, über welche die Sensorelektronik und die Hauptelektronik miteinander verbunden sind, werden nicht galvanisch getrennt, dafür aber mit einer hinreichend starken Befilterung versehen. Nur die Datenleitungen werden galvanisch getrennt. Durch die relativ starke Befilterung der Versorgungs-spannung lässt sich der Einfluss von Störströmen soweit minimieren, dass die jeweiligen Anforderungen an die Störfestigkeit der Leitungen erfüllt werden.

Die Datenleitungen, bei denen eine entsprechend starke Befilterung zum Verlust von Information führen, werden mittels der aus dem Stand der Technik bekannten Maßnahmen galvanisch getrennt. Wiederum sind die elektrischen Bauteile, die für die galvanische Trennung eingesetzt werden, so bemessen, dass die Anforderungen an die Störfestigkeit erfüllt sind. Die erfindungsgemäße Lösung erlaubt eine Kommunikation, die nur von den Grenzfrequenzen der verwendeten galvanischen Trennkomponenten, wie Optokoppler, usw. eingeschränkt ist. Somit lassen sich in Bezug auf den bekannten Stand der Technik, z.B. der Tiefpassfilterung, weitaus höhere Datenübertragungsraten realisieren, wodurch sich die Performance des Feldgeräts erheblich verbessern lässt. Insbesondere werden die Messdynamik und somit auch die Messgenauigkeit erheblich erhöht. Weitere Vorteile des erfindungsgemäßen Feldgerätsbestehen darin, dass die Materialkosten geringer sind und dass die Baugröße der galvanischen Trennkomponenten reduziert ist.

Eine vorteilhafte Ausgestaltung des erfindungsgemäßen Feldgeräts sieht vor, dass die Hauptelektronik und die Sensorelektronik räumlich voneinander getrennt und über ein Verbindungsmittel, das üblicherweise als Seil oder Kabel bezeichnet wird, miteinander verbunden sind. Alternativ sind die Hauptelektronik und die Sensorelektronik bei einem Kompaktgerät in einem Gehäuse angeordnet. Hierbei können beide auf unterschiedlichen Leiterplatten oder aber auch auf der gleichen Leiterplatte angeordnet sein.

Gemäß einer vorteilhaften Ausgestaltung des erfindungsgemäßen Feldgeräts handelt es sich bei dem Filtermittel um ein einstufiges Filter oder um ein mehrstufiges Filter. Gemäß der Erfindung ist das Filtermittel als stromkompensierte oder nicht-stromkompensierte Drossel ausgestaltet.

Weiterhin sieht eine vorteilhafte Weiterbildung des erfindungsgemäßen Feldgerätsvor, dass dem Filtermittel jeweils ein Kondensator - oder auch mehrere Kondensatoren - vorgeschaltet und/oder nachgeschaltet sind. So sind beispielsweise ein X-Kondensator vor der Drossel und ein X-Kondensator nach der Drossel vorgesehen. In der Versorgungsleitung VCC und in der Erdleitung GND ist jeweils ein Y-Kondensator angeordnet.

Darüber hinaus wird vorgeschlagen, dass die Drosseln so ausgelegt sind, dass ihr entsprechender Wirkwiderstand minimal ist. Insbesondere ist sichergestellt, dass die entsprechenden Spannungsabfälle in Summe wesentlich kleiner sind als die von der Regel/Auswerteeinheit zur Verfügung gestellte Versorgungsspannung.

Bei den galvanischen Trennkomponenten handelt es sich beispielsweise um Optokoppler, Induktivkoppler, Leiterplattenübertrager, Übertrager. Die Datenleitung/Datenleitungen ist/sind so ausgestaltet, dass sie eine unidirektionale und/oder eine bidirektionale Datenübertragung zwischen der Regel-/Auswerteeinheit und dem Sensor gestattet/gestatten.

Die Erfindung wird anhand der nachfolgenden Figuren näher erläutert. Es zeigt:
Fig. 1: ein Blockschaltbild der Vorrichtung zur Reduzierung bzw. Minimierung von Störsignalen des erfindungsgemäßen Feldgeräts,
Fig. 2a: eine schematische Darstellung einer ersten Ausgestaltung des erfindungsgemäßen Feldgeräts als eine sog. Seilvariante mit räumlicher Trennung zwischen der Regel-/Auswerteeinheit und dem Sensor,
Fig. 2b: eine schematische Darstellung einer zweiten Ausgestaltung des erfindungsgemäßen Feldgeräts als eine sog. Seilvariante mit räumlicher Trennung zwischen der Regel-/Auswerteeinheit und dem Sensor und
Fig. 3: eine schematische Darstellung einer Ausgestaltung des erfindungsgemäßen Feldgeräts als ein Kompaktgerät.

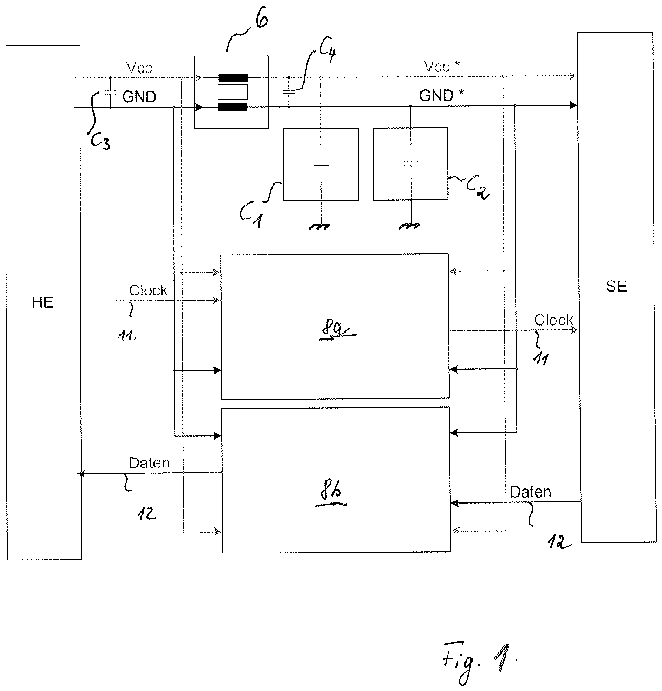

Fig. 1 zeigt ein Blockschaltbild des erfindungsgemäßen Feldgeräts 1 der Prozessautomatisierung umfassend eine Vorrichtung zur Reduzierung bzw. Minimierung von Störsignalen . Die Hauptelektronik HE und die Sensorelektronik SE sind über Versorgungsleitungen VCC, GND und Datenleitungen 11, 12, miteinander verbunden. Über die unidirektionale Datenleitung 11 gibt die Hauptelektronik den Takt CLOCK vor, der den Datenaustausch über die Datenleitung 12 triggert. In den beiden Datenleitungen 11, 12 ist jeweils eine galvanische Trennkomponente 8a, 8b vorgesehen, die die Übertragung von Störsignalen über die Datenleitung/Datenleitungen 11,12 verhindert. Bei der galvanischen Trennkomponente 8a, 8b handelt es sich beispielsweise um einen Optokoppler, einen digitalen Isolator, einen sog. I-Coupler, einen Print-Übertrager oder einen sonstigen Übertrager. Die galvanischen Trennkomponenten 8a, 8b sind so ausgelegt, dass die gewünschte Störfestigkeit des Feldgeräts 1 erreicht wird.

Störsignale, die auf den Versorgungsleitungen VCC, GND auftreten, werden über Filterelemente eliminiert. Auch die Filterelemente sind so ausgelegt, dass eine gewünschte Störfestigkeit erreicht wird. Im dargestellten Fall ist in die Versorgungsleitungen VCC, GND eine Drossel 6, und zwar eine stromkompensierte Drossel, eingesetzt. Es kann sich selbstverständlich, je nach Anwendungsfall, auch um eine nicht-stromkompensierte Drossel, oder um einen Ferriten handeln. Bei den Kondensatoren C1, C2 handelt es sich um Y-Kondensatoren, während es sich bei den Kondensatoren C3, C4 um X-Kondensatoren handelt.

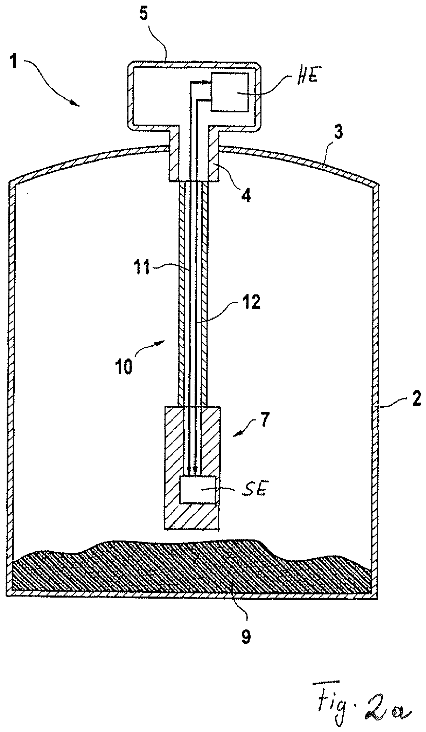

Fig. 2a zeigt eine schematische Darstellung einer ersten Ausgestaltung des erfindungsgemäßen Feldgeräts 1, das als sog. Seilvariante ausgestaltet ist. Im gezeigten Fall ermittelt das erfindungsgemäße Feldgerät 1 z.B. den Grenzfüllstand eines Füllguts 9 in dem Behälter 2 oder den Druck in dem Behälter 2. Das Feldgerät 1 setzt sich zusammen aus einem Sensor 7, der sich im Prozess befindet, einer Regel-/Auswerteeinheit 5, die außerhalb des Prozesses in einer Öffnung 4 im Deckel 3 des Behälters 2 montiert ist, und einem Verbindungsmittel 10, z. B. einem Kabel oder einem Seil, das den Sensor 7 mit der Auswerteeinheit 5 verbindet.

Der Regel-/Auswerteeinheit 5 ist die Hauptelektronik HE und dem Sensor 7 die Sensorelektronik SE zugeordnet. Vorzugsweise ist die der Regel-/Auswerteeinheit 5 zugeordnete Hauptelektronik HE ein Master-Prozessor und die dem Sensor 7 zugeordnete Sensorelektronik SE ein Slave-Prozessor. Beide Prozessoreinheiten HE, SE kommunizieren miteinander über die Datenleitungen 11, 12. Über die Datenleitungen 11, 12 ist je nach Anwendung ein uni- oder bidirektionaler Datenaustausch möglich.

In die zumindest eine Datenleitung 11, 12, über die die Hauptelektronik HE und die Sensorelektronik SE kommunizieren, ist zumindest eine galvanische Trennkomponente 8a, 8b eingefügt, die die Übertragung von Störsignalen über die Datenleitung/Datenleitungen 11,12 verhindert. In den Versorgungsleitungen VCC, GND, über die dem Sensor 7 eine für den Betrieb des Sensors 7 ausreichende Versorgungsspannung VCC zur Verfügung gestellt wird, ist ein Filtermittel vorgesehen, das so ausgelegt ist, dass durch EMV-Normen vorgebbare jeweilige Anforderungen an die Störfestigkeit der Versorgungsleitungen VCC, GND erfüllt sind.

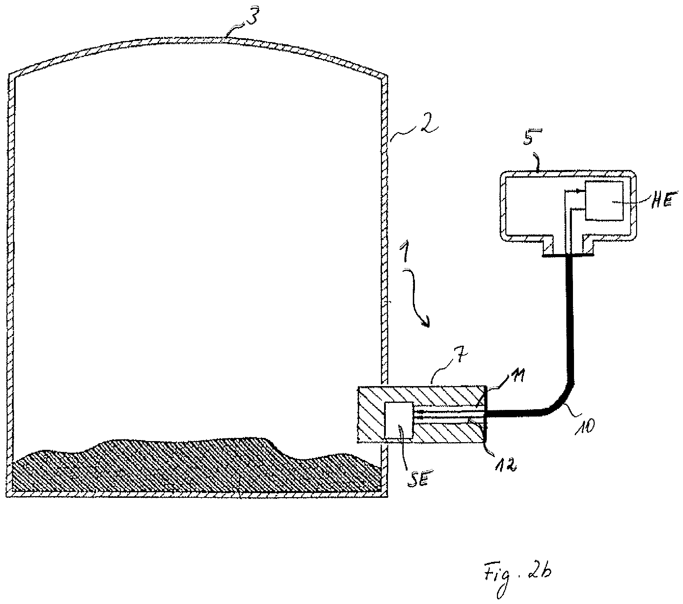

Fig. 2b zeigt eine schematische Darstellung einer zweiten Ausgestaltung des erfindungsgemäßen Feldgeräts . Auch hier ist eine Seilvariante mit räumlicher Trennung zwischen der Regel-/Auswerteeinheit 5 und dem Sensor 7 zu sehen. Der Sensor 7, bei dem es sich beispielsweise um einen Drucksensor handelt, ist in der Wandung des Behälters 2 befestigt, während die Regel-/Auswerteeinheit bzw. der Messumformer über das Verbindungsmittel 10 von dem Sensor 7 und damit vom Prozess abgesetzt ist.

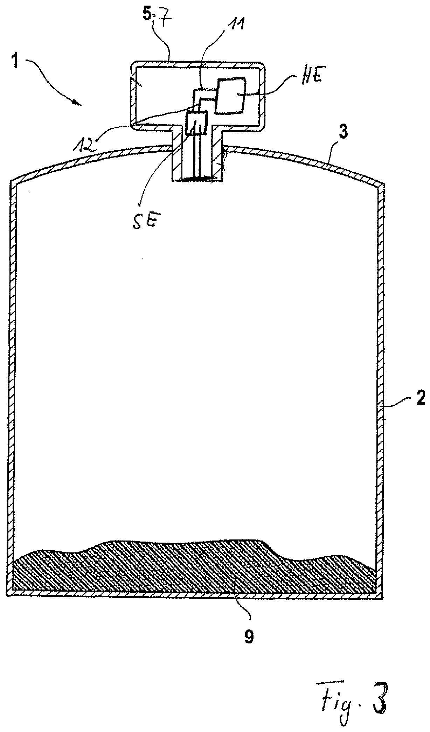

Fig. 3 zeigt das erfindungsgemäße Feldgerät als ein Kompaktgerät, bei dem die Regel-/Auswerteeinheit 5 und der Sensor, ebenso wie die Hauptelektronik HE und die Sensorelektronik SE in einem Gehäuse angeordnet sind. Hierbei können die Hauptelektronik HE und die Sensorelektronik SE auf unterschiedlichen Leiterplatten oder aber auch auf der gleichen Leiterplatte angeordnet sein. In die zumindest eine Datenleitung 11, 12, über die die Hauptelektronik HE und die Sensorelektronik SE kommunizieren, ist zumindest eine galvanische Trennkomponente 8a, 8b eingefügt, die die Übertragung von Störsignalen über die Datenleitung/Datenleitungen 11,12 verhindert. In den Versorgungsleitungen VCC, GND, über die dem Sensor 7 eine für den Betrieb des Sensors 7 ausreichende Versorgungsspannung VCC zur Verfügung gestellt wird ist ein Filtermittel vorgesehen, das so ausgelegt ist, dass durch EMV-Normen vorgebbare jeweilige an die Störfestigkeit der Versorgungsleitungen VCC, GND erfüllt sind.

Wie bereits an vorheriger Stelle erwähnt, dient das Feldgerät, ob es nun als Kompaktgerät oder als Seilvariante mit abgesetzter Regel-/Auswerteeinheit 5 und Sensor 7 ausgestaltet ist, der Bestimmung und Überwachung einer beliebigen Prozessgröße.

## Patentansprüche

1. Feldgerät (1) der Prozessautomatisierung, umfassend eine Vorrichtung zur Reduzierung bzw. Minimierung von Störsignalen, wobei das Feldgerät (1) eine Regel-/Auswerteeinheit (5) und einen Sensor (7) mit zumindest einer Hauptelektronik (HE) und mit zumindest einer Sensorelektronik (SE) aufweist, wobei zumindest eine Datenleitung (11, 12) vorgesehen ist, über die die Hauptelektronik (HE) und die Sensorelektronik (SE) kommunizieren, wobei zumindest eine galvanische Trennkomponente (8a, 8b) vorgesehen ist, die in die zumindest eine Datenleitung (11, 12) eingefügt ist und die die Übertragung von Störsignalen über die zumindest eine Datenleitung (11, 12) verhindert, wobei Versorgungsleitungen (VCC, GND) vorgesehen sind, über die dem Sensor (7) eine für den Betrieb des Sensors (7) ausreichende Versorgungsspannung (VCC) zur Verfügung gestellt wird, wobei in den Versorgungsleitungen (VCC, GND) ein Filtermittel vorgesehen ist, das so ausgelegt ist, dass vorgegebene Anforderungen an die Störfestigkeit der Versorgungsleitungen (VCC, GND) erfüllt sind,
wobei es sich bei dem Filtermittel um stromkompensierte oder nicht-stromkompensierte Drosseln (6) handelt,
**dadurch gekennzeichnet, dass**
die Versorgungsleitungen (VCC, GND) ohne galvanische Trennung vorgesehen sind, und dass die Sensorelektronik (SE) und die Hauptelektronik (HE) über die Versorgungsleitungen (VCC, GND) miteinander verbunden sind.

2. Feldgerät (1) nach Anspruch 1,
wobei es sich bei dem Filtermittel um ein einstufiges oder um ein mehrstufiges Filter handelt.

3. Feldgerät (1) nach Anspruch 1 oder 2,
wobei dem Filtermittel jeweils ein Kondensator oder mehrere Kondensatoren (C1,C2, C3, C4) sowohl zwischen den Versorgungsleitungen (VCC, GND) als auch gegen Erde vorgeschaltet und/oder nachgeschaltet sind.

4. Feldgerät (1) nach einem oder mehreren der vorhergehenden Ansprüche,
wobei die Drosseln (6) so ausgelegt sind, dass ihr entsprechender Wirkwiderstand minimal ist, und wobei sichergestellt ist, dass die entsprechenden Spannungsabfälle in Summe kleiner sind als die von der Regel/Auswerteeinheit (5) zur Verfügung gestellte Versorgungsspannung (VCC).

5. Feldgerät (1) nach Anspruch 1,
wobei es sich bei den galvanischen Trennkomponenten (8a, 8b) um Optokoppler, Induktivkoppler, Leiterplattenübertrager, oder Übertrager handelt.

6. Feldgerät (1) nach Anspruch 1,
wobei die Datenleitung (11;12) so ausgestaltet ist, dass sie eine unidirektionale und/oder eine bidirektionale Datenübertragung zwischen der Regel-/Auswerteeinheit (5) und dem Sensor (7) gestattet.

7. Feldgerät (1) nach Anspruch 1,
wobei es sich bei dem Feldgerät (1) um ein Füllstandsmessgerät, um ein Druckmessgerät, um ein Durchflussmessgerät oder um ein zu Analysezwecken eines flüssigen oder gasförmigen Mediums ausgestaltetes Analysemessgerät handelt.

8. Feldgerät (1) nach einem oder mehreren der vorhergehenden Ansprüche,
wobei die Hauptelektronik (HE) der Regel-/Auswerteeinheit (5) und die Sensorelektronik (SE) räumlich voneinander abgesetzt sind und über ein Verbindungsmittel (10) miteinander verbunden sind.

9. Feldgerät (1) nach einem oder mehreren der Ansprüche 1 bis 7,
wobei die Hauptelektronik (HE) und die Sensorelektronik (SE) bei einem Kompaktgerät in einem Gehäuse angeordnet.

10. Feldgerät (1) nach Anspruch 9, wobei die Hauptelektronik (HE) und die Sensorelektronik (SE) auf unterschiedlichen Leiterplatten oder auf der gleichen Leiterplatte angeordnet sind.

## Claims

1. Field device (1) used in process engineering, comprising a unit to reduce or minimize interference signals, wherein the field device (1) has a control/evaluation unit (5) and a sensor (7) with at least a main electronics unit (HE) and at least a sensor electronics unit (SE),
wherein at least a data cable (11, 12) is provided, via which the main electronics unit (HE) and the sensor electronics unit (SE) communicate with one another, wherein at least a galvanic isolation component (8a, 8b) is provided, wherein said component is inserted in the at least one data cable (11, 12) and prevents the transmission of interference signals via the at least one data cable (11, 12), wherein supply lines (VCC, GND) are provided by means of which a supply voltage (VCC) that is sufficient for the operation of the sensor (7) is provided to the sensor (7),
wherein a filtering resource is provided in the supply lines (VCC, GND), GND), which is designed in such a way that prespecified requirements with regard to the interference resistance of the supply lines (VCC, GND) are met,
wherein the filtering resource comprises current-compensated or non-current-compensated chokes (6),
**characterized in that**
the supply lines (VCC, GND) are designed without galvanic isolation and
the sensor electronics unit (SE) and the main electronics unit (HE) are interconnected by means of the supply lines (VCC, GND).

2. Field device (1) as claimed in Claim 1,
wherein the filtering resource is a single-stage or multi-stage filter.

3. Field device (1) as claimed in Claim 1 or 2,
wherein one or more capacitors (C1, C2, C3, C4) are switched upstream and/or downstream from the filtering resource, both between the supply lines (VCC, GND) and in relation to earth.

4. Field device (1) as claimed in one or more of the previous claims,
wherein the chokes (6) are designed in such a way that their corresponding active resistance is minimal, and wherein it is ensured that the corresponding voltage drops are, in sum, smaller than the supply voltage (VCC) provided by the control/evaluation unit (5).

5. Field device (1) as claimed in Claim 1,
wherein the galvanic isolation components (8a, 8b) are optocouplers, inductive couplers, printed circuit board transformers or transformers.

6. Field device (1) as claimed in Claim 1,
wherein the data cable (11, 12) is designed in such a way that it permits unidirectional and/or bidirectional data transmission between the control/evaluation unit (5) and the sensor (7).

7. Field device (1) as claimed in Claim 1,
wherein the field device (1) is a level measuring device, a pressure measuring device, a flowmeter or an analyzer designed for the purpose of analyzing a liquid or gaseous medium.

8. Field device (1) as claimed in one or more of the previous claims,
wherein the main electronics unit (HE) of the control/evaluation unit (5) and the sensor electronics unit (SE) are physically distanced from one another and are interconnected by means of a connecting unit (10).

9. Field device (1) as claimed in one or more of the previous Claims 1 to 7,
wherein the main electronics unit (HE) and the sensor electronics unit (SE) are arranged in a housing in the case of a compact device.

10. Field device (1) as claimed in Claim 9, wherein the main electronics unit (HE) and the sensor electronics unit (SE) are arranged on different printed circuit boards or on the same printed circuit board.

## Revendications

1. Appareil de terrain (1) de la technique d'automatisation des process, comprenant un dispositif destiné à la réduction ou à la minimisation de signaux parasites, l'appareil de terrain (1) comportant une unité de régulation / d'exploitation (5) et un capteur (7) avec au moins une électronique principale (HE) et au moins une électronique de capteur (SE),
au moins une ligne de données (11, 12) étant prévue, ligne par l'intermédiaire de laquelle l'électronique principale (HE) et l'électronique de capteur (SE) communiquent,
au moins un composant de séparation galvanique (8a, 8b) étant prévu, lequel composant est inséré dans l'au moins une ligne de données (11, 12) et empêche la transmission de signaux parasites sur l'au moins une ligne de données (11, 12),
des lignes d'alimentation (VCC, GND) étant prévues, lignes par l'intermédiaire desquelles une tension d'alimentation (VCC) suffisante pour le fonctionnement du capteur (7) est mise à disposition du capteur (7),
un moyen de filtrage étant prévu dans les lignes d'alimentation (VCC, GND), GND), lequel moyen de filtrage est conçu de telle sorte que des exigences prédéfinies pour la résistance aux parasites des lignes d'alimentation (VCC, GND) sont remplies,
le moyen de filtrage étant matérialisé par des selfs (6) compensées ou non compensées en courant,
**caractérisé**
**en ce que** les lignes d'alimentation (VCC, GND) sont prévues sans séparation galvanique et
**en ce que** l'électronique de capteur (SE) et l'électronique principale (HE) sont reliées entre elles par l'intermédiaire des lignes d'alimentation (VCC, GND).

2. Appareil de terrain (1) selon la revendication 1,
pour lequel le moyen de filtrage est un filtre à un seul étage ou un filtre à plusieurs étages.

3. Appareil de terrain (1) selon la revendication 1 ou 2,
pour lequel un ou plusieurs condensateurs (C1, C2, C3, C4) sont couplés en amont et/ou en aval du moyen de filtrage, à la fois entre les lignes d'alimentation (VCC, GND) et par rapport à la terre.

4. Appareil de terrain (1) selon l'une ou plusieurs des revendications précédentes, pour lequel les selfs (6) sont conçues de telle sorte que leur résistance active correspondante est minimale, et
pour lequel on s'assure que les chutes de tension correspondantes sont au total plus petites que la tension d'alimentation (VCC) fournie par l'unité de régulation / d'exploitation (5).

5. Appareil de terrain (1) selon la revendication 1,
pour lequel les composants d'isolation galvanique (8a, 8b) sont des optocoupleurs, des coupleurs inductifs, des transformateurs de carte de circuit imprimé ou des transformateurs.

6. Appareil de terrain (1) selon la revendication 1,
pour lequel la ligne de données (11, 12) est conçue de telle sorte qu'elle permet une transmission de données unidirectionnelle et/ou bidirectionnelle entre l'unité de régulation / d'exploitation (5) et le capteur (7).

7. Appareil de terrain (1) selon la revendication 1,
pour lequel il s'agit, concernant l'appareil de terrain (1), d'un transmetteur de niveau, d'un capteur de pression, d'un débitmètre ou d'un analyseur conçu à des fins d'analyse d'un produit liquide ou gazeux.

8. Appareil de terrain (1) selon l'une ou plusieurs des revendications précédentes, pour lequel l'électronique principale (HE) de l'unité de régulation / d'exploitation (5) et l'électronique de capteur (SE) sont séparées spatialement l'une de l'autre et sont reliées l'une à l'autre par un moyen de liaison (10).

9. Appareil de terrain (1) selon l'une ou plusieurs des revendications 1 à 7,
pour lequel l'électronique principale (HE) et l'électronique de capteur (SE) sont disposées dans un boîtier dans le cas d'un appareil compact.

10. Appareil de terrain (1) selon la revendication 9, pour lequel l'électronique principale (HE) et l'électronique de capteur (SE) sont disposées sur des cartes de circuit imprimé différentes ou sur la même carte de circuit imprimé.
